(19) Europäisches Patentamt
European Patent Office
Office européen des brevets

(11) Publication number: 0 453 074 A2

(12) EUROPEAN PATENT APPLICATION

(21) Application number: 91301710.9

(22) Date of filing: 01.03.91

(51) Int. Cl.$^5$: C08L 59/00, // (C08L59/00, 33:06)

(30) Priority: 01.03.90 JP 50258/90

(43) Date of publication of application:
23.10.91 Bulletin 91/43

(84) Designated Contracting States:
AT BE CH DE DK ES FR GB GR IT LI LU NL SE

(71) Applicant: POLYPLASTICS CO. LTD.
3-13, Azuchicho, 2-chome
Chuo-Ku Osaka-shi Osaka 541 (JP)

(72) Inventor: Tajima, Yoshihisa
687-1, Umegaya
Shimizu-shi, Shizuoka (JP)
Inventor: Yokouchi, Mitsuru
324 Miyashita
Fuji-shi, Shizuoka (JP)
Inventor: Miura, Masaru
4-3-12, Kanbara
Kanbaracho, Ihara-Gun, Shizuoka (JP)

(74) Representative: Jackson, Peter et al
HYDE, HEIDE & O'DONNELL 10-12 Priests
Bridge
London SW15 5JE (GB)

(54) Polyacetal resin composition structure and process for producing the same.

(57) A composition structure having excellent mechanical properties, dimensional accuracy and acid resistance is provided by a polyacetal resin and a thermoplastic acrylic resin incorporated thereinto to form a dispersion in the form of an interpenetrating network, and further including a filler B, said structure retaining the characteristic features of both resins, the weight ratios of the components A, B and C being shown by the following formulae (1) and (2):

$$(B+C)/(A+B+C) = 0.03 \text{ to } 0.06 \text{ (by weight)} \quad (1)$$
$$C/(B+C) = 0.05 \text{ to } 0.95 \text{ (by weight)} \quad (2).$$

## Fig. 4.

# POLYACETAL RESIN COMPOSITION STRUCTURE AND PROCESS FOR PRODUCING THE SAME

The present invention relates to a composition structure comprising a polyacetal resin as the main component into which a thermoplastic acrylic resin is interpenetrated and dispersed therein to form a network. The invention also relates to the process for producing the said structure.

Polyacetal is known as a resin having an excellent chemical resistance and well-balanced mechanical properties and is widely used in various fields.

Polyacetal resin, however, exhibits a high coefficient of shrinkage and a high coefficient of linear expansion in the course of molding due to its crystallinity, so that it has a poor dimensional accuracy. Further, its weather resistance and acid resistance are rather insufficient. Therefore it is problematic to use this resin as such as the material of exterior furnishings of automobiles or the like to be exposed to the open air or to the weather. Although it has been attempted to improve the weather resistance by blending the resin with an acrylic resin such as polymethyl methyacrylate (PMMA) (polymer blending), a mere mixture of the polyacetal resin with PMMA has problems for use as the material of exterior furnishings, particularly those which are large or complicated in shape. The problems arise because the characteristic mechanical properties of the polyacetal resin, such as impact resistance and tensile elongation, are impaired by PMMA mixed therewith, probably due to a poor dispersibility of PMMA in the resin, and in addition improvement in the dimensional accuracy to overcome defects such as distortion and shrinkage during molding is still insufficient. Another problem is that the chemical resistance inherent in the polyacetal resin is impaired by the addition of PMMA.

Under these circumstances the present inventors have made intensive investigations for the purpose of improving the dispersibility of the acrylic resin in the polyacetal resin in forming a polymer blend thereof, and have noted the relative amounts of the components including a filler and also the relative magnitudes of the surface tensions thereof. As a result they have found that a network structure comprising these two resins interpenetrating into each other can easily be produced by suitably adjusting these relative magnitudes. They have further found that the interpenetrating resin network structure thus produced has excellent weather resistance and retains the excellent chemical resistance and mechanical properties inherent in the polyacetal resin. The present invention has been completed on the basis of these findings.

Thus the present invention relates to a composition structure which comprises a polyacetal resin A in which a thermoplastic acrylic resin C is dispersed to form a network structure and which is produced from a resin composition comprising a polyacetal resin A as the matrix, a filler B an a thermoplastic acrylic resin C in amounts within the ranges of the following formulae (1) and (2):

$$(B + C)/(A + B + C) = 0.03 \text{ to } 0.06 \text{ (by weight)} \quad (1)$$
$$C/(B + C) = 0.05 \text{ to } 0.95 \text{ (by weight)} \quad (2).$$

The invention further provides a process for producing the interpenetrating resin network structure defined above, characterized by melt-kneading the polyacetal resin A with the thermoplastic acrylic resin C in the presence of the filler B having a surface tension higher than that of the thermoplastic resin C at the melt-kneading temperature.

With regard to the state of dispersion of the components of the interpenetrating resin network structure, the accompanying figures 1 and 2 are schematic views of a dispersion state of a conventional simple polymer blend, wherein thermoplastic acrylic resin particles C contained in an amount relatively smaller than that of the polyacetal resin A (matrix resin) are dispersed. Figures 3 and 4 are schematic views of the interpenetrating resin network structure of the present invention, wherein a specified filler B is incorporated into the thermoplastic acrylic resin C and, although the amount of the thermoplastic acrylic resin C is small, it forms a network together with the polyacetal resin A to give an entangled structure forming a substantially continuous phase.

Namely, in the present invention, at least a minor effective part or usually a major part of the acrylic resin C forms a substantially continuous dispersed phase in the polyacetal resin A. Such a dispersion structure is the characteristic feature of the present invention and the defects due to the ordinary dispersion structure of a mere mixture of two components wherein the separate particles are dispersed can be thereby overcome.

Such a dispersion structure can be confirmed by suitably pulverizing or cutting the formed structure such as a piece of the molding and removing the polyacetal resin A as the matrix by decomposing it with an acid solution. It can be confirmed also by the fact that when the thermoplastic acrylic resin C is dispersed to form a network, the original shape is retained even after the removal of the matrix A by decomposition, while when it is dispersed in particle form, the original shape cannot be retained. The thermoplastic acrylic resin C forming the network can be nearly quantitively determined by separating it through a suitable sieve after the decomposition of the matrix.

The polyacetal resin used as the component A in the present invention is a polymeric compound containing

an oxymethylene group (-CH$_2$O-) as the main constituent unit, including a polyoxymethylene homopolymer and copolymers, terpolymers and block copolymers thereof containing a small amount of other constituent units in addition to the oxymethylene group. The molecule of the polyacetal resin may be not only one having a linear structure but also one having a branched or crosslinked structure. The degree of polymerization of the polyacetal is not particularly limited and any such polymer which is moldable can be used.

The thermoplastic acrylic resin used as the component C in the present invention includes homopolymers of an acrylic acid and its esters (such as methyl acrylate, ethyl acrylate, n-propyl acrylate, isopropyl acrylane, n-butyl acrylate, n-hexyl acrylate and n-octyl acrylate); homopolymers of methacrylic acid and its esters (such as methyl methacrylate, ethyl methacrylate, n-propyl methacrylate, isopropyl methacrylate, n-butyl methacrylate, isobutyl methacrylate, n-amyl methacrylate and n-octyl methacrylate); and copolymers of them with styrene, acrylonitrile, butadene or isoprene. Among them, methyl methacrylate homopolymer and copolymers comprising methyl methacrylate as the main component and an acrylic ester, methacrylic ester, acrylic acid, methacrylic acid, styrene or acrylonitrile are preferred. From the viewpoint of processability, a straight chain polymer having a low viscosity is preferred.

The filler used as the component B must be one having a surface tension at the melt kneading temperature at least higher than that of the thermoplastic acrylic resin C, preferably by at least 2 mN/m (1 mN/m = 1 dyn/cm).

The surface tension herein required is as measured at the melt-kneading temperature. The surface tension of a thermoplastic resin at that temperature can be determined by the hanging drop method as widely employed in the art. The hanging drop method comprises determining the surface tension of a liquid sample on the basis of the shape and behaviour of a droplet thereof put inside a vertical tube and hanging down from the end of the tube. In the case of a component B which will not melt, a critical surface tension is determined by the contact angle method based on a zisman plot (see the Examples given below).

The surface tension of the polyacetal resin A at 190°C is 18 to 23 mN/m (18-23 dyn/cm), whereas that of the thermoplastic acrylic resin C is at least 23 mN/m (for example, that of polymethyl methacrylate is about 28 mN/m). Therefore the surface tension of the filler B must be higher than the above-described value of the component C when they are kneaded at 190°C. The filler used as the component B is preferably one which has a mean particle diameter of 0.05 to 50μm, particularly preferably 0.1 to 10μm. The smaller the particle diameter, the more advantageous for forming a fine network structure.

The proportions of the three components A, B and C in the present invention must satisfy the following conditions:

$$(B + C)/(A + B + C) = 0.03 \text{ to } 0.06 \text{ (by weight)} \quad (3)$$
$$C/(B + C) = 0.05 \text{ to } 0.95 \text{ (by weight)} \quad (4).$$

From the viewpoint of maintaining the characteristic feature of the polyacetal resin as intended in the present invention and for the purpose of forming a network structure with even a small amount of the component C, the effect of the present invention is remarkable when the amount of the components B+C is up to 60% by weight based on the components A+B+C, particularly when it is up to 40% by weight. In order to enclose the component B sufficiently with the component C, the ratio of C/(B+C) is preferably high.

The preferred ratios are in the following ranges:

$$(B + C)/(A + B + C) = 0.05 \text{ to } 0.4 \text{ (by weight)} \quad (1)$$
$$C/(B + C) = 0.25 \text{ to } 0.95 \text{ (by weight)} \quad (2).$$

Supposedly the dispersion network structure of the present invention is formed as follows: when the melt kneading is conducted in the presence of the filler B which satisfies the above-described conditions, the particles of the component B are selectively enclosed in the thermoplastic acrylic resin C under the influence of the relative surface tension thereof, and the component C containing a large number of the particles of the component B extends arborescently as the component B is moved and dispersed by the kneading, and the formed branches are bonded to one another to form a network structure.

The filler used as the component B may be inorganic or organic and may be any filler which satisfies the above-described conditions, and is selected from among the following fillers in consideration of their surface tension. The surface tension can, if necessary, be adjusted by surface-treating of the filler with a surface-treating agent.

Suitable inorganic fillers B can be selected from the group consisting of silicates such as silica, quartz powder, glass beads, milled glass fibre, glass flakes, glass balloons, glass powder, calcium silicate, aluminium silicate, kaolin, talc, clay, mica, diatomaceous earth and wollastonite; metal oxides such as iron oxide, titanium oxide, zinc oxide, antimony trioxide and alumina; metal carbonates such as calcium sulphate and barium sulphate; and ferrite, silicon carbide, silicon nitride and boron nitride.

Suitable organic fillers B include heat-resistant (high-melting) thermoplastic and thermosetting resins in powdery form. Examples of them include powdery phenolic resins, high-melting acrylic resins (such as graft polymers), polyamide resins, melamine resins and epoxy resins. They can be used either singly or in combination of two or more of them.

The resin composition structure of the present invention may further contain known additives such as lubricants, slip additives, nucleating agents, dyes, pigments, release agents, antioxidants, heat stabilizers, weather (light) stabilizers, hydrolysis inhibitors, inorganic or organic fibrous reinforcements, platy or granular filler other than the component B and thermoplastic resin other than the component A or C in order to obtain desired properties without impairing the object.

Although the composition structure of the present invention may be produced by various known processes, it is at least necessary to melt the three components A, B and C together by heating and kneading them for at least 30 sec. Other components may be incorporated thereinto to melt them simultaneously with the three components or separately therefrom. For example, after the components are homogeneously mixed together by means of a mixer such as a tumbler or a Henshel mixer, the mixture is fed into a single-screw or twin-screw extruder to melt-knead it and form pellets, which are then molded or, alternatively, direct molding is also possible.

The melt-kneading herein is desirably conducted at the melting temperature and at a shear rate of at least 40 sec$^{-1}$, particularly 100 to 500 sec$^{-1}$.

The treatment temperature is 5 to 100°C higher than the melting temperature of the resin components, particularly preferably 10 to 60°C higher than the latter. When the temperature is too high, decomposition and abnormal reactions occur unfavourably.

The melt-kneading time ranges from 30 sec to 15 min, preferably from 1 to 10 min.

It will be apparent from the above description and the following Examples that in the polyacetal resin composition structure of the present invention, the thermoplastic acrylic resin is dispersed to form a network in the polyacetal resin, that the structure can be produced by a simple process, that the characteristic features of both the polyacetal and thermoplastic acrylic resins can be maintained unlike the conventional mere composition of the two components (particle dispersion), that the structure of the present invention has excellent mechanical properties, a high dimensional accuracy and good weather resistance and acid resistance, and that it is suitable for use as the material of exterior furnishings of automobiles or the like and also the use thereof as the material of large parts or those of a complicated shape is expected.

The invention is further described with reference to the accompanying drawings, in which:

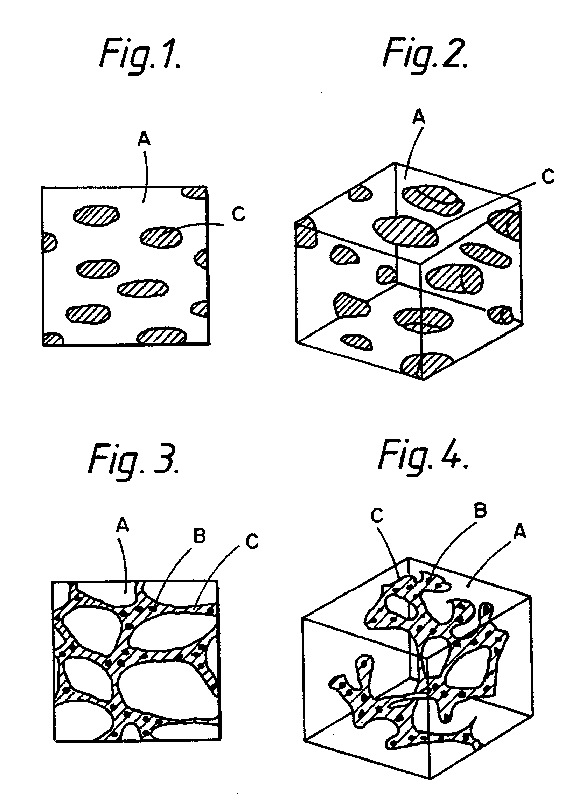

Figure 1 is a schematic (plan) view of a particle dispersion state in a conventional polymer blend;

Figure 2 is a schematic (three-dimensional) view of a particle dispersion state in a conventional polymer blend;

Figure 3 is a schematic (plan) view of an interpenetrating network structure of the present invention;

Figure 4 is a schematic (three-dimensional) view of an interpenetrating network structure of the present invention.

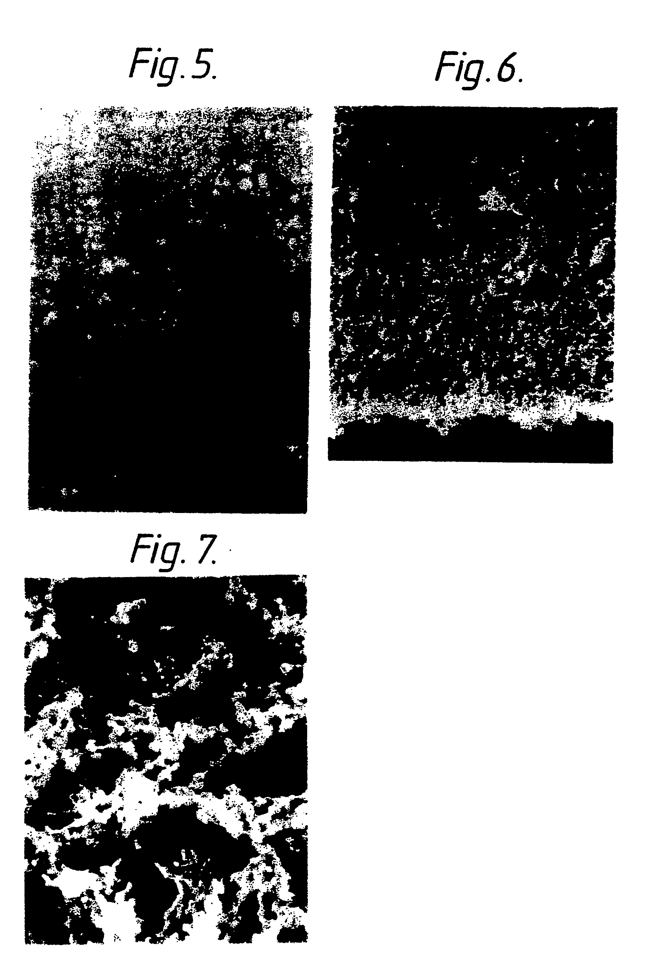

Figure 5 is an optical microphotograph of the particle structure after the acid decomposition of the molding obtained in Comparative Example 3.

Figure 6 is an electron photomicrograph of the particle structure (network structure) after the acid decomposition of the molding obtained in Example 1

Figure 7 is an enlarged electron photomicrograph of the central part of Figure 6.

## Examples

The following non-limiting Examples further illustrate the present invention.

### Example 1

Polyacetal resin (A) (Duracon, a product of Polyplastics Co., Ltd), methyl methacrylate (co)polymer resin (C) (a product of Sumitomo Chemical Co., Ltd) and acrylic rubber particles (B) having a mean particle diameter of 0.5μm (a product of Mitsubishi Rayon Co., Ltd) each having a surface tension (at 190°C) as specified in Table 1 were mixed together at a ratio specified in Table 1 and melt-kneaded with a 30mm twin-screw extruder at a rotational speed of 80 rpm (shear rate: about 100 sec$^{-1}$) at a preset temperature of 190°C to form pellets. Then the pellets were molded into tensile test pieces with a molding machine manufactured by Nissei Jushi Kogyo K.K. at a barrel temperature of 80°C. The test pieces were evaluated to obtain the results given in Table 1.

The evaluation methods are as described below.

### Determination of surface tension of each component:

The surface tensions of the polyacetal resin and the methyl methacrylate (co)polymer resin were deter-

4

mined by the hanging drop method (described in "Shin Jikken Kagaku Koza", Vol. 18, Kaimen to Koroid [Interface and Colloid]" [1977] published by Maruzen Co., Ltd., pp. 78 and 79) with an automatic surface tension meter PD-Z manufactured by Kyowa Kaimen Kagaku K.K. in an atmosphere at 190°. The surface tensions of the polyacetal resin and the methyl methacrylate (co)polymer resin were 21 mN/m (21 dyn/cm) and 28 mN/m (28 dyn/cm), respectively.

To determine the surface tension of the acrylic rubber particles, they were molded at 200°C into a film by means of a press and the critical surface tension and temperature coefficient thereof were determined by the contact angle method (described in "Shin Jikken Kagaku Koza", Vol. 18, "Kaimen to Koroid [Interface and Colloid]" [1977], published by Maruzen Co., Ltd., pp.93 to 106) with an automatic contact angle meter CA-Z manufactured by Kyowa Kaimen Kagaku K.K. The results were as follows, corresponding to a value of 30 mN/m (30 dyn/cm) in terms of the surface tension of the acrylic rubber particles at 190°C:

surface tension at 25°C: 42 mN/m
surface tension at 60°C: 39.5 mN/m
surface tension at 80°C: 38 mN/m
temperature gradient $(-dr/dT) = 0.072$

Confirmation of interpenetrating polyacetal resin network structure:

A molding piece (10x10x3 mm) was placed in a hydrochloric acid/methanol solution (volume ratio of 32 N hydrochloric acid/methanol : 1/3). After refluxing at 80°C for 12 h to conduct acid decomposition and dissolution of the polyacetal resin (matrix resin), the dispersion state of the methyl methacrylate (co)polymer resin was examined.

When the methyl methacrylate (co)polymer resin formed a dispersion of the particles as in the conventional one, the molding piece could not retain its shape but only a precipitate of the (fine) particles of the methyl methacrylate (co)polymer resin was found either macroscopically or with an optical microscope (Figure 5: optical microphotograph of Comparative Example 3).

In contrast, when the methyl methacrylate (co)polymer resin formed the interpenetrating network structure as in the present invention, the shape of the molding piece was kept as it was, which could be confirmed macroscopically or with an optical microscope. When the magnification was further increased with a scanning electron microscope, the interpenetrating network structure could be confirmed more definitely (Figure 6: electron photomicrograph of Example 1). It was found that a uniform network structure was formed ranging from the surface (the bottom of the figure) to the centre of the molding piece (Figure 7: enlarged photograph of the central part of the molding piece).

The sample of the particle dispersion form and that of the interpenetrating network structure were subjected to quantitive determination as follows: after the acid treatment of the molding piece in the same manner as that described above, it was filtered through a 12-mesh sieve (1.68 mm opening) and the amount (% by weight) of the residue remaining on the sieve was determined. The network structure-forming part remained on the sieve, while the particle-dispersion part passed through the sieve. Accordingly, the amount (% by weight) of the residue indicated that of the (B+C) part in the interpenetrating thermoplastic resin network structure.

Mechanical strength of molding piece

The Izod impact strength (notched) of the molding piece was determined according to ASTM D 256 while the tensile elongation thereof was determined according to ASTM D 638.

Coefficient of linear expansion of molding piece

The coefficient of linear expansion of the molding piece was determined according to ASTM D 696

Determination of acid resistance:

After the molding piece was immersed in a 20% aqueous sulphuric acid solution at 20°C for 180 days, crack formation on the surface thereof was macroscopically examined.

Comparative Examples 1 to 3

Molding pieces were prepared from polyacetal resin A alone, methyl methacrylate (co)polymer resin A alone, methyl methacrylate (co)polymer resin C alone, or two components [polyacetal resin A and methyl methacrylate (co)polymer resin C] free from acrylic rubber particles B in the same manner as that of Example 1 and evaluated.

Examples 2 and 3 and Comparative Example 4

Molding pieces were prepared in the same manner as that of Example 1 except that the acrylic rubber particle (component B) was replaced with a melamine resin particle having a mean particle diameter of 1 μm (a product of Nippon Shokubai Kagaku Kogyo Co., Ltd.), calcium carbonate having a mean particle diameter of 10μm (a product of Toyo Fine Chemical Co., Ltd.) or a polydimethylsiloxane particle having a mean particle diameter of 5μm (a product of Toray Silicone Co., Ltd) each having a surface tension (at 190°C) specified in Table 1. They were evaluated in the same manner as that of Example 1 to obtain the results given in Table 1.

Examples 4 to 9 and Comparative Examples 5 to 8

Molding pieces were prepared in the same manner as that of Example 1 except that the ration of the methyl methacrylate (co)polymer resin to the acrylic rubber particle was altered as specified in Table 2 and evaluated. The results are given in Table 2.

Table 1

| | | Surface tension (dyn/cm) | Example | | | Comparative Example | | | |
|---|---|---|---|---|---|---|---|---|---|
| | | | 1 | 2 | 3 | 1 | 2 | 3 | 4 |
| A | Polyacetal resin (wt. %) | 21 | 80 | 80 | 80 | 100 | —— | 80 | 80 |
| C | Methyl methacrylate copolymer resin (wt. %) | 28 | 15 | 15 | 15 | —— | 100 | 20 | 15 |
| | Acrylic rubber particle (wt. %) | 30 | 5 | —— | —— | —— | —— | —— | —— |
| B | Melamine resin particle (wt. %) | 43 | —— | 5 | —— | —— | —— | —— | —— |
| | Calcium carbonate particle (wt. %) | 65 | —— | —— | 5 | —— | —— | —— | —— |
| | Polydimethylsiloxane particle (wt. %) | 10 | —— | —— | —— | —— | —— | —— | 5 |
| | Change in shape after decomposition with acid | | shape un-changed | shape un-changed | shape un-changed | entirely dec. | shape un-changed | shape un-retained | shape un-retained |
| | Amount of resin remaining after decomposition with acid (wt. %) | | 19 | 15 | 12 | 0 | 100 | 0 | 0 |
| | Notched Izod impact strength (kgf cm/cm) | | 6.4 | 5.6 | 5.9 | 6.0 | 1.5 | 3.2 | 1.5 |
| | Tensile elongation (%) | | 75 | 52 | 41 | 55 | 4 | 25 | 23 |
| | Coefficient of linear expansion (cm x $10^{-5}$/cm·°C) | | 7 | 7 | 7 | 10 | 7 | 9 | 9 |
| | Acid resistance (crack formation) | | no | no | no | yes | no | no | no |

EP 0 453 074 A2

Table 2

| | | Surface tension (dyn/cm) | Example | | | | | | Comparative Example | | | |
|---|---|---|---|---|---|---|---|---|---|---|---|---|
| | | | 4 | 5 | 6 | 7 | 8 | 9 | 5 | 6 | 7 | 8 |
| A | Polyacetal resin (wt. %) | 21 | 95 | 95 | 95 | 60 | 60 | 60 | 95 | 95 | 60 | 60 |
| C | Methyl methacrylate copolymer (wt. %) resin | 28 | 4.5 | 3.75 | 1.25 | 36 | 30 | 4 | 5 | — | 40 | — |
| B | Acrylic rubber particle (wt. %) | 30 | 0.5 | 1.25 | 3.75 | 4 | 10 | 36 | — | 5 | — | 40 |
| | Change in shape after decomposition with acid | | shape unchanged | | | | | | shape unretained | | | |
| | Amount of resin remaining after decomposition with acid (wt. %) | | 4.5 | 4.7 | 4.3 | 38 | 35 | 20 | 0 | 0 | 0 | 0 |
| | Notched Izod impact strength (kgf cm/cm) | | 7.1 | 7.3 | 6.8 | 4.0 | 4.5 | 3.7 | 4.8 | 3.9 | 1.3 | 2.9 |
| | Tensile elongation (%) | | 80 | 84 | 71 | 37 | 35 | 49 | 42 | 48 | 21 | 25 |
| | Coefficient of linear expansion (cm x $10^{-5}$/cm·°C). | | 7 | 7 | 8 | 7 | 7 | 8 | 10 | 10 | 7 | 9 |
| | Acid resistance (crack formation) | | no | no | no | no | no | no | no | yes | no | yes |

## Claims

1. An interpenetrating resin network structure produced from a resin composition comprising a polyacetal resin A as the matrix, a filler B and a thermoplastic acrylic resin C in amounts within the ranges of the following formulae (1) and (2):
$$(B + C)/(A + B + C) = 0.03 \text{ to } 0.06 \text{ (by weight)} \quad (1)$$
$$C/(B + C) = 0.05 \text{ to } 0.95 \text{ (by weight)} \quad (2)$$

2. A polyacetal resin composition structure according to claim 1, wherein at least a minor effective part of the acrylic resin C forms a substantially continuous dispersed phase in the polyacetal resin A.

3. A polyacetal resin composition structure according to claim 1 or claim 2, wherein the amounts of components A, B and C are in the ranges of the following formulae (3) and (4):
$$(B + C)/(A + B + C) = 0.05 \text{ to } 0.4 \text{ (by weight)} \quad (3)$$
$$C/(B + C) = 0.25 \text{ to } 0.95 \text{ (by weight)} \quad (4).$$

4. A polyacetal resin composition structure according to any preceding claim, wherein the filler B has a mean particle diameter of 0.05 to 50 μm.

5. A polyacetal resin composition structure according to any preceding claim, wherein the thermoplastic acrylic resin C is a methyl methacrylate homopolymer resin or a copolymer resin mainly comprising methyl methacrylate.

6. A process for producing the interpenetrating resin network structure set forth in any preceding claim, characterized by melt-kneading a polyacetal resin A with a thermoplastic acrylic resin C in the presence of a filler B having a surface tension higher than that of the thermoplastic resin C at the melt kneading temperature.

7. A process for producing the interpenetrating resin network structure according to claim 6, wherein the filler B has a surface tension at least 2 mN/m (2 dyn/cm) higher than that of the thermoplastic acrylic resin C at the melt kneading temperature.

8. A process for producing the interpenetrating resin network structure according to claim 6 or 7, wherein the component C has a surface tension of at least 23 mN/m (23 dyn/cm).

9. A process for producing the interpenetrating resin network structure according to any one of claims 6 to 8, wherein the thermoplastic acrylic resin C is a straight chain polymer having a low viscosity.

10. A process for producing the interpenetrating resin network structure according to any one of claims 6 to 9, wherein the melt-kneading is conducted at the melting temperature and at a shear rate of at least 40 sec$^{-1}$.

# Fig.1.

# Fig.2.

# Fig. 3.

# Fig. 4.

## Fig. 5.

## Fig. 6.

## Fig. 7.